# EUROPEAN PATENT SPECIFICATION

(11) **EP 1 545 236 B1**
(45) Date of publication and mention of the grant of the patent: **12.07.2006**
(21) Application number: 03753614.1
(22) Date of filing: 26.09.2003
(51) Int. Cl.: A23J 3/16, A23L 1/00, A23L 1/29

(54) **PROCESS FOR THE PREPARATION OF A NUTRITIVE PREPARATION BASED ON VEGETABLE MATTER AND THE PRODUCT PREPARED BY THE PROCESS**
VERFAHREN ZUR HERSTELLUNG EINES NAHRUNGSMITTELPRÄPARATS AUF PFLANZLICHER GRUNDLAGE SOWIE DAS NACH DIESEM VERFAHREN HERGESTELLTE PRODUKT
PROCEDE D'ELABORATION D'UNE PREPARATION NUTRITIVE A BASE DE MATIERE VEGETALE ET PRODUIT PREPARE SELON LEDIT PROCEDE

(30) Priority: 01.10.2002 FI 20021740
(43) Date of publication of application: 29.06.2005
(73) Proprietor: Sihvola, Jouni, 11415 Tallinn (EE)
(72) Inventor: Sihvola, Jouni, 11415 Tallinn (EE)
(74) Representative: Hakkila, Maini Annika
(86) International application number: PCT/FI2003/000703
(87) International publication number: WO 2004/030465

(56) References cited:
- EP-A1- 0 954 984
- DE-C1- 4 302 183
- FR-A1- 2 389 336
- US-A- 4 737 364

## Description

### FIELD OF TECHNOLOGY

The object of this invention is a process in accordance with the preamble of patent claim 1 for the preparation of a nutritive preparation based on vegetable matter and the product prepared by the process. In this context the nutritive preparation based on vegetable matter or a vegetarian nutritive preparation refers to vegetable cutlets, balls, nuggets, loaf, kebabs and corresponding products.

### STATE OF THE ART

Changes in eating habits have created a need to produce alternative nutritive preparations based on vegetable matter, with a lower fat content and more beneficial to the body. Particularly in the Western countries the share of strictly vegetables eating vegetarians is heavily increasing, and the share of people who have decreased their consumption of meat and increased their use of vegetables has also significantly increased. On the other hand fast food restaurants and snack bars that are part of the Western culture have not been able to fully meet the consumers' expectations and new habits. The producers have not been able to develop vegetable matter based alternatives to minced meat products, such as hamburgers, and the same also applies to other meat products and their different uses. The producers have not been able to produce meat-like texture and taste in the preparations and the behaviour of these preparations as end products has not been as expected. The vegetable matter based cutlet preparations and meat substitutes on the market frequently contain "bad carbohydrates", such as sugar, starch, malt extract, glucose and refined white flour, which may cause sudden elevation in blood sugar level, which may lead to hyperglycaemia.

A process for the preparation of vegetable matter based soybean substance for vegetable cutlets resembling hamburgers has been described in DE 4302183. The soybean substance contains textured soy protein, water, spices, vegetable oil and breading flour containing egg white, carbohydrates and fat.

EP 0954984 describes the effect of a fibre composition for preventing colon cancer. The composition contains a minimum of two components in the ratio of 1:1-1:9, which have been chosen from among soybean, wheat bran and flax, as well as optionally e.g. 0.1-4 units of weight of psyllium. The fibre composition may be cooked to lengthen storage life and to improve taste.

US 4737364 discloses a powdery nutritive concentrate soluble in liquid and intended for dieting, which contains soy protein isolate, soybean oil, lecithin, liquorice root, ground psyllium, spices, vitamins, minerals and amino acids.

A process to for the production of a nutritive preparation containing textured vegetable protein and ground fibre material, intended for dieting and restoring health, is known from FR 2389336. Ground fibre material, such as soy bran, ear of corn, rice husk, etc. are included in the product before the vegetable protein is textured. The textured nutritive preparation prepared in this way may be mixed with normal food to reduce the amount of energy and to increase the amount of fibre.

By using the processes of state of the art producers have not succeeded in producing firm 100% vegetable cutlets fit for frying from textured soy protein that would both in texture and taste resemble hamburgers.

The producers of textured soy protein have traditionally produced soybean cutlets by texturing cutlet-size pieces from soy flour. Uncooked raw products are finn and they resemble cutlets in size and form, but they split easily when dry and their preparation process is time-consuming requiring long soaking and cooking. The finished end product does not corresponded to meat products in terms of properties, taste or texture, as the products prepared by this process are usually very tough.

Traditionally meat-processing industry has used textured soy protein added to meat in the production of sausages and hamburgers, in which case the properties of the meat itself make the product firm and fit for frying, as a considerable part of the product still comes from the animal kingdom. Vegetable cutlets, balls and sausages, where egg white has been used as a binding agent, are already previously familiar, but products prepared by this process are naturally not completely vegetarian or vegetable matter based products.

### SUMMARY OF THE INVENTION

The object of this invention is a nutritive preparation based on vegetable matter or a vegetarian nutritive preparation and the process used in preparing it, by means of which the producer is able to avoid the technical disadvantages of the solutions presented above.

The object of the invention is also a process for the preparation of a nutritive preparation based on vegetable matter or a vegetarian nutritive preparation, which refers here to vegetable cutlets, balls, nuggets, loaves, kebabs and corresponding products, as well as products prepared by this process, the texture, flavour and other properties of which can be varied within the process.

The characteristic features of the process and product introduced by the invention are presented in the enclosed patent claims.

### DETAILED DESCRIPTION OF THE INVENTION.

Surprisingly it was discovered that it is possible to prepare completely vegetarian nutritive preparations or nutritive preparations based completely on vegetable matter, such as vegetable cutlets, balls, nuggets, loaves, kebabs and corresponding products, which are firm and fit for frying and which in texture very closely resemble products prepared from minced meat. In addition to that, the flavour of the product can, if necessary, be modified to be practically similar to the flavour of the corresponding products prepared from minced meat.

The nutritive preparation based on vegetable matter according to the invention is based on textured soy protein (tvp=textured vegetable protein or tsp=textured soy protein) and psyllium *(Plantago psyllium,* psyllium husk powder). Usually psyllium's total dietary content, in psyllium husk powder with a purity of 98%, is around 86 %, it is made up of 71 % soluble fibre and 15 % insoluble fibre, and it contains 50kJ energy, 1.5g protein, 0 - 1g carbohydrates and 0 - 1g fat in 100g. Textured soy protein and psyllium can by means of the process according to the invention be turned into a vegetarian nutritive preparation or a nutritive preparation based on vegetable matter, containing protein and closely resembling the texture of meat, as well as its flavour, if necessary.

Nutritive preparations based on vegetable matter, such as vegetable cutlets, loaves, balls, kebabs, nuggets or corresponding products, where minced meat, particularly that of beef, pork, turkey or chicken has traditionally been used, can be prepared by the process according to the invention. One of the most important embodiments of the invention is a 100% vegetable matter based hamburger or a vegetarian hamburger, resembling a traditional beef hamburger, in which the usability of the invention is at its best.

Textured soy protein is produced from soybeans by removing soy oil from them by means of cold pressing and by evaporating the water, hereafter the product is ground and textured, in which case water is added to fat-free soy flour. The produced solution is heated and under high pressure extruded to a hot space, where it acquires a solid state of desired shape as flakes or grits. This process yields textured soy protein flakes rich in fibres and with a pleasant flavour. Both dark and light soy protein flakes are available. The textured soy protein concentrate thus obtained preferably contains from 55 to 75wt% of protein. The nutritive content of generally used textured soy protein concentrate is presented in the following table 1.

**Table 1:**

| Nutritive content /100 g | | Minerals / 100 g | | Vitamins / 100 g | |
|---|---|---|---|---|---|
| Energy | 1351kj/323kcal | Calcium | 363 mg | Thiamine (B₁) | 0,3 mg |
| Protein (calc. on dry matter) | 69 g | Iron | 15mg | Riboflavin (B₂) | 0,1 mg |
| Carbohydrates | 19 g | Magnesium | 315 mg | Niacin (B₃) | 15 mg |
| Fibres | 4 g | Phosphorus | 839 mg | Folic acid (B₉) | 350 µg |
| Ash | 5 g | Copper | 14 µg | | |
| Fat | <1 g | Sodium | 1 µg | | |

By means of the process according to the invention a nutritive preparation based on vegetable matter, consisting of completely vegetable based starting materials can be prepared. In the process according to the invention textured soy protein, preferably as a concentrate in the form of flakes, psyllium, preferably in the form of husk powder, liquid and optionally other ingredient/s selected from flour, spices, herbs and non-animal broth concentrate are turned into a mixture by mixing and warming the mixture at an elevated temperature. Thereafter the obtained mixture may be turned to any desired forms such as pieces of desired shape, and then the pieces are subjected to elevated temperature, for example fried by heat.

Preferably the textured soy protein concentrate flakes, non-animal broth concentrate, such as vegetable, mushroom or herb broth concentrate and optional spice/s are mixed with liquid, e.g. water and the mixture is preferably warmed at 70-100°C with gently stirring for approximately 5-25 minutes. Hereafter the optional flour, for example soy flour is added to the mixture and finally psyllium husk powder. For example thin cutlets are shaped from the mixture or mass and they are fried, preferably in edible oil on the frying pan or in the oven.

The nutritive preparation based on vegetable matter according to the invention contains in percentages by weight calculated from the mixture:
1. Liquid, such as water or other corresponding liquid to form the mixture, the liquid content of which may vary from 60 to 85%, preferably from 70 to 80 %.
2. Textured soy protein, preferably as a concentrate in the form of flakes. The protein content in the soy protein may vary from 30 to 90%, preferably from 55 to 75%. Soy protein flakes may be dark or light, and the content of textured soy protein in the ready-made mixture may vary from 10 to 30%, preferably from 17 to 23%, calculated from the dry mixture.
3. Psyllium, preferably in the form of powder, such as extremely fine psyllium husk powder, which has approximately 98% purity and 86% fibre content. The content of psyllium may vary from 0.5 to 20%, preferably from 1 to 5%, calculated from the dry mixture. If psyllium husk powder with lower fibre content is used such as below 86%, it is added to the mixture in proportion to its fibre content.
   The following optional ingredients are added, if necessary, in order to improve flavour, appearance and texture of the product.
4. Flour or flours selected from soy flour, maize flour, corn flour, leguminous fibre powder and potato flour in an amount from 0.5 to 25%, preferably from 2 to 18% calculated from the dry mixture and preferably soy flour with a fat content from 10 to 40%.
5. Non-animal broth concentrate in an amount from 0.5 to 25%, preferably from 1 to 4% calculated from the dry mixture and preferably vegetable, herb or mushroom broth concentrate.
6. Spice/spices and/or herb/herbs, such as white pepper in an amount of 0.1-5%, preferably 0.3-2% calculated from the dry mixture.
7. Edible oil or food fat, preferably polyunsaturated 100% vegetable oil is used, according to need, to produce a beautiful and good frying result.

Different types of vegetable matter based raw materials, such as leguminous plant fibres like pea fibres, tomato powder, paprika, edible mushroom purée, root crop purée, and the like may be added to these ingredients in order to improve flavour, texture and appearance. Practically any products, herbs and spices from the vegetable kingdom may be added to the mixture for modifying the taste.

The nutritive preparations introduced in the invention, such as cutlets may be crumbed with edible mushroom powder or other vegetable based flour normally used for breading, preferably with edible mushroom powder.

The proportion of dry substances and water can be varied within the limits presented above. When the content of water in the mixture is increased, more dry substances are respectively to be added to it, like for example psyllium powder in order to get the best end result.

The most essential features of the invention are the synergistic properties of the textured soy protein, particularly soy protein flakes and psyllium, particularly as powder as well as the excellent binding agent action of psyllium powder.
Additionally daily consumption of these substances is highly recommendable from the point of view of health in the light of current information. The nutritive preparation according to the invention is economic and easy to prepare and additionally it is a highly beneficial product, which does not contain cholesterol, lactose or gluten, but a great deal of protein and fibres. The product has also a low fat content and the fats it contains are polyunsaturated ones.

The preferable embodiments of the nutritive preparation according to the invention do not contain any "bad carbohydrates" either. The texture, flavour and other properties of the nutritive preparation based on vegetable matter can be varied in the process by changing the proportions of the ingredients. The combination helps to make the soy protein flakes keep together and be fit for frying, in which case it is possible to prepare a succulent vegetable cutlet resembling the texture and flavour of a hamburger.

It is easy to use the product (dry mixture), as its ingredients keep extremely long in the dry form (more than a year in the dry mixture form before liquid is added to the mixture). When the ingredients are mixed with the liquid, it is possible to keep the mixture at the refrigerator temperature for several days, after which it is still easy to handle, for example to slice cutlets before actual frying.

Finished products, such as fried cutlets, loaf, etc. can be easily reheated by all known food heating methods, such as the frying pan, frying surface, oven, microwave oven etc. In addition to the above the product is also very transformable and suitable for all kinds of seasoning methods, which make it possible to get the desired end result.

A more detailed illustration of the invention is given in the following by means of an example disclosing a preferable embodiment.

### EXAMPLES

### Example 1

5500 g of ready-made frying mixture was used for the preparation of a hundred vegetable cutlets. The following ingredients as weight percentages were used for the preparation of the vegetable cutlet mixture:
- 5 l water
- 1100 g tvp flakes (protein content about 70%, content calculated from the dry mixture 70.5%)
- 200 g soy flour (protein content 38.5%, fat content 20%, carbohydrate content 16%, content calculated from the dry mixture 12.8%)
- 150 g psyllium powder (purity 98%, fibre content 86%, content calculated from the dry mixture 9.6%)
- 100 g vegetable broth concentrate (fat content 23%, carbohydrate content 10%, protein content 8.5%, content calculated from the dry mixture 6.4%)
- 10 g ground white pepper (content calculated from the dry mixture 0.6%)

The vegetable cutlet mixture was prepared as follows:

Textured soy protein concentrate flakes (tvp), vegetable broth concentrate and white pepper were mixed with 5 litres of water and the mixture was cooked gently with stirring for 5 minutes. Then soy flour was added to the mixture and finally psyllium powder carefully mixing it. During the manufacture some water was evaporated from the mixture. Thin cutlets were shaped from the mixture prepared in this way and they were fried in edible oil on the frying pan or in the oven.

The vegetable cutlets kept solid and cohesive throughout the frying without any binding agents from the animal kingdom. The final product was a 100% vegetable cutlet closely resembling the texture and flavour of a hamburger.

The example presented above is only one application of the solution according to the invention. It is essential to note that for example soy flour is not absolutely necessary, and it may, if necessary, be left out or replaced by some other corresponding flour. The use of cooking oil is not necessary either, likewise the broth concentrate and white pepper serving as spices may also be left out or added to some other spice, if the need arises.

The order of preparing the mixture is flexible. In one embodiment the dry substances , can first be mixed together and water added only before frying, in which case the storage life of the product is very long.

It is obvious to an expert in the field that the application forms of the invention are not restricted to the example presented above, but they may vary within the framework of the enclosed claims.

## Claims

1. A process for the preparation of a nutritive preparation based on vegetable matter or a vegetarian nutritive preparation, **characterized in that** textured soy protein, psyllium, liquid and optional ingredient/s are turned into a mixture by mixing and heating the mixture at an elevated temperature, then pieces of desired shapes are formed from the mixture and they are fried by heat.

2. A process according to claim 1, **characterized in that** textured soy protein, preferably concentrate flakes, optional non-animal broth concentrate and other optional ingredient/s are mixed with water and the mixture is heated at a temperature of 70-100°C, then the optional flour and psyllium powder is added, and pieces of desired shape are prepared from the substance and they are fried.

3. A process according to claim 1 or 2, **characterized in that** the optional ingredients are selected from flours, spices, herbs, non-animal broth concentrates and edible oils and fats.

4. A process according to any one of claims 1-3, **characterized in that** the flour is selected from soy flour, maize flour, corn flour, leguminous fibre powder and potato flour and preferably the flour is soy flour, the fat content of which is 10-40%, and the non-animal broth concentrate is vegetable, mushroom or herb broth concentrate.

5. A process according to any one of claims 1-4, **characterized in that** 60-85wt% of liquid, 10-30wt% of textured soy protein, 0.5-20wt% of psyllium and optionally 0.5-25wt% of flour/s, 0.5-25wt% of non-animal broth concentrate and 0.1-5wt% of spice/s and/or herb/s are used.

6. A process according to any one of claims 1-5, **characterized in that** 70-80wt% of liquid, 17-23wt% of textured soy protein, 1-5wt% of psyllium and optionally 2-18wt% of flour/s, 1-4wt% of non-animal broth concentrate and 0.3-2wt% of spice/s and/or herb/s are used.

7. A process according to any one of claims 1-6, **characterized in that** the nutritive preparation based on vegetable matter or a vegetarian nutritive preparation is a vegetable cutlet, ball, nugget, loave, kebab and the like.

8. A nutritive preparation based on vegetable matter or a vegetarian nutritive preparation, **characterized in that** it comprises textured soy protein, preferably textured soy protein concentrate as flakes, psyllium, preferably psyllium powder, and liquid, preferably water and optional ingredients selected from flours, spices, herbs, non-animal broth concentrates and edible oils and fats.

9. A nutritive preparation based on vegetable matter or a vegetarian nutritive preparation according to claim 8, **characterized in that** the psyllium powder is psyllium husk powder, the flour is selected from soy flour, maize flour, corn flour, leguminous fibre powder and potato flour, preferably the flour is soy flour, the fat content of which is 10-40%, and the non-animal broth concentrate is vegetable, mushroom or herb broth concentrate.

10. A nutritive preparation based on vegetable matter or a vegetarian nutritive preparation according to claim 8 or 9, **characterized in that** the vegetarian nutritive preparation is a vegetable cutlet, ball, nugget, loave or kebab or the like.

## Patentansprüche

1. Verfahren zur Herstellung einer Ernährungszubereitung auf der Grundlage von pflanzlichem Material oder einer vegetarischen Zubereitung, **dadurch gekennzeichnet, dass** ein Gemisch aus texturiertem Protein, Psyllium, einer Flüssigkeit und gegebenenfalls anderen Zutaten durch Mischen hergestellt und das Gemisch bei einer erhöhten Temperatur gewärmt wird, anschließend aus dem Gemisch Stücke mit gewünschter Form geform und diese Stücke mit Wärme gegart werden.

2. Verfahren nach Anspruch 1, **dadurch gekennzeichnet, dass** das texturierte Sojaprotein, bevorzugt Konzentratflocken, gegebenenfalls nicht-tierischer Brühekonzentrat und gegebenenfalls andere Zutaten mit Wasser beigemengt werden, anschließend das Gemisch bei einer Temperatur von 70 bis 100 °C gewärmt wird, gegebenenfalls Mehl und Psylliumpulver zugegeben, Stücke mit gewünschter Form hergestellt und die Stücke gegart werden.

3. Verfahren nach Anspruch 1 oder 2, **dadurch gekennzeichnet, dass** die gegebenenfalls andere Zutaten aus der Gruppe von Mehlen, Gewürzen, Kräutern, nicht-tierischen Brühekonzentraten und essbaren Ölen und Fetten ausgewählt werden.

4. Verfahren nach einem der Ansprüche 1 bis 3, **dadurch gekennzeichnet, dass** das Mehl aus der Gruppe von Sojamehl, Maismehl, Getreidemehl, Faserpulver aus Hülsenfrüchten und Kartoffelmehl ausgewählt wird und bevorzugt Sojamehl mit einem Fettgehalt von 10 bis 40 % ist, und der nicht-tierische Brühekonzentrat ein Brühekonzentrat aus Pflanzen, Pilzen oder Kräutern ist.

5. Verfahren nach einem der Ansprüche 1 bis 4, **dadurch gekennzeichnet, dass** von 60 bis 85 Gew.-% Flüssigkeit, von 10 bis 30 Gew.-% texturiertes Sojaprotein, von 0,5 bis 20 Gew.-% Psyllium und gegebenenfalls von 0,5 bis 25 Gew.-% Mehl, von 0,5 bis 25 Gew.-% nicht-tierische Brühe und von 0,1 bis 5 Gew.-% Gewürze und Kräuter eingesetzt werden.

6. Verfahren nach einem der Ansprüche 1 bis 5, **dadurch gekennzeichnet, dass** von 70 bis 80 Gew.-% Flüssigkeit, von 17 bis 23 Gew.-% texturiertes Sojaprotein, von 1 bis 5 Gew.-% Psyllium und gegebenenfalls von 2 bis 18 Gew.-% Mehl, von 1 bis 4 Gew.-% nicht-tierische Brühe und von 0,3 bis 2 Gew.-% Gewürze und Kräuter eingesetzt werden.

7. Verfahren nach einem der Ansprüche 1 bis 6, **dadurch gekennzeichnet, dass** die Ernährungszubereitung auf der Grundlage von pflanzlichem Material oder die vegetarische Zubereitung ein pflanzliches Schnitzel, Bällchen, Nugget, Laib, Kebab oder Ähnliches ist.

8. Ernährungszubereitung auf der Grundlage von pflanzlichem Material oder eine vegetarische Zubereitung, **dadurch gekennzeichnet, dass** die Zubereitung texturiertes Protein, bevorzugt texturierter Sojaproteinkonzentrat als Flocken, Psyllium, bevorzugt Psylliumpulver, und Flüssigkeit, bevorzugt Wasser, und gegebenenfalls andere Zutaten ausgewählt aus der Gruppe von Mehlen, Gewürzen, Kräutern, nicht-tierischen Brühekonzentraten und essbaren Ölen und Fetten enthält.

9. Ernährungszubereitung auf der Grundlage von pflanzlichem Material oder eine vegetarische Zubereitung nach Anspruch 8, **dadurch gekennzeichnet, dass** das Psylliumpulver Psylliumschotenpulver und das Mehl aus der Gruppe von Sojamehl, Maismehl, Getreidemehl, Fasermehl aus Hülsenfrüchten und Kartoffelmehl ausgewählt ist, wobei das Mehl bevorzugt Sojamehl mit einem Fettgehalt von 10 bis 40 % und der nicht-tierische Brühekonzentrat ein Brühekonzentrat aus Pflanzen, Pilzen oder Kräutern ist.

10. Ernährungszubereitung auf der Grundlage von pflanzlichem Material oder eine vegetarische Zubereitung nach Anspruch 8 oder 9, **dadurch gekennzeichnet, dass** die vegetarische Ernährungszubereitung ein pflanzliches Schnitzel, Bällchen, Nugget, Laib, Kebab oder Ähnliches ist.

## Revendications

1. Procédé pour la fabrication de préparation nutritive à base de matière végétale ou une préparation nutritive végétarienne, **caractérisée par** le faitique la protéine de soja exturée, le psyllium, le liquide, et les ingrédiens optionels sont transformés en un mélange par mixage et chauffage dudit mélange à une température élevée, et ensuite les morceaux de forme desirée sont façonnés à partir du dudit mélange et ils sont frits par la chaleur.

2. Procédé selon la revendication 1, **caractérisé par le fait que** les protéines de soja texturée, de préférence un concentré de flocons, le concentré de bouillon d'origine non animale et les autres ingrédients sont mélangés avec de l'eau et le mélange est chauffé à une température de 70-100°C, puis la farine facultative et la poudre de psyllium sont ajoutées, et ensuite les morceaux de forme desirée sont préparés à partir de la substance et ils sont frits.

3. Procédé selon les revendications 1 ou 2, **caractérisé par le fait que** les ingrédients optionnels sont sélectionnés parmi des farines, des aromates, des fines herbes, des concentrés de bouillon non animal et des huiles et des graisses comestibles.

4. Procédé selon les revendications de 1 à 3, **caractérisé par le fait que** la farine est sélectionnée à partir de farine de soja, de farine de maïs, de farine de blé, de poudre de fibres légumineuses et de fécule de pommes de terre et de préférence la farine est une farine de soja dont le contenu en graisse est de 10-40% et le concentré de bouillon non animal est végétal, un concentré de fines herbes ou de champignons.

5. Procédé selon les revendications de 1 à 4, **caractérisé par le fait que** 60-85% du poids est liquide, 10-30% du poids est de la protéine de soja texturée, 0.5-20% du poids est du psyllium et en option 0.5- 25% du poids est de la farine, 0.5-25% poids est du concentré de bouillon non animal et 0.1-5% du poids est des aromates et/ou des fines herbes sont utilisés.

6. Procédé selon les revendications de 1 à 5, **caractérisé par le fait que** 70-80% du poids est liquide, 17-23% du poids est des protéine de soja texturée, 1-5% du poids est du psyllium et en option 2-18% du poids est de la farine, 1-4% du poids est du concentré de bouillon non animal et 0.3-2% du poids est des aromates et/ou des fines herbes.

7. Procédé selon les revendications de 1 à 6, **caractérisé par le fait que** la préparation nutritive à base de matière végétale ou une préparation nutritive végétarienne est des steaks végétals, des boulettes végétales, des nuggets végétals, des hebabs végétals, ou semblables.

8. Préparation nutritive à base de matière végétale ou une préparation nutritive végétarienne, **caractérisée par le fait qu'**elle comprend des protéines concentrées de soja texturé, de préférence des flocons, du psyllium, de préférence de la poudre de psyllium, du liquide, de préférence de l'eau et des ingrédients facultatifs sélectionnées à partir de farines, d'aromates, de fines herbes, de concentrés de bouillon non animal et d'huiles et de graisses comestibles.

9. Préparation nutritive à base de matière végétale ou une préparation nutritive végétarienne selon la revendication 8, **caractérisée par le fait que** la poudre de psyllium est une poudre de balle de psyllium, la farine est sélectionnée à partir de farine de soja, de farine de maïs, de farine de blé, de poudre de fibres légumineuses et de fécule de pommes de terre, de préférence la farine est une farine de soja, le contenu en graisse étant de 10-40% et le concentré de bouillon non animal est végétal, un concentré de fines herbes ou de champignons.

10. Préparation nutritive à base de matière végétale ou une préparation nutritive végétarienne selon les revendications 8 ou 9, **caracterisée par le fait que** la préparation nutritive à base de matière végétale est des steaks végétals, des boulettes végétales, des nuggets végétals, des khebabs végétals, ou semblables.
